(19) Europäisches Patentamt
European Patent Office
Office européen des brevets

(11) **EP 3 782 851 B1**

(12) **EUROPÄISCHE PATENTSCHRIFT**

(45) Veröffentlichungstag und Bekanntmachung des Hinweises auf die Patenterteilung:
**27.09.2023 Patentblatt 2023/39**

(21) Anmeldenummer: **20190679.9**

(22) Anmeldetag: **12.08.2020**

(51) Internationale Patentklassifikation (IPC):
***B60L 58/12*** (2019.01)

(52) Gemeinsame Patentklassifikation (CPC):
**B60L 58/12;** B60L 2200/26; B60L 2240/62; B60L 2250/16; B60L 2260/52; B60L 2260/54; Y02T 10/70; Y02T 10/72; Y02T 90/16

(54) **ASSISTENZSYSTEM FÜR EIN SCHIENENFAHRZEUG**

ASSISTANCE SYSTEM FOR A RAIL VEHICLE

SYSTÈME D'AIDE POUR UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2019 DE 102019212695**

(43) Veröffentlichungstag der Anmeldung:
**24.02.2021 Patentblatt 2021/08**

(73) Patentinhaber: **Siemens Mobility GmbH 81739 München (DE)**

(72) Erfinder:
• **Probst, Sebastian 90408 Nürnberg (DE)**
• **Lottersberger, Christoph 90459 Nürnberg (DE)**

(74) Vertreter: **Siemens Patent Attorneys Postfach 22 16 34 80506 München (DE)**

(56) Entgegenhaltungen:
**DE-A1-102016 216 405**

**Beschreibung**

Die deutsche Patentschrift DE 10 2017 129 255 B3 offenbart ein Schienenfahrzeug.

Das aus der genannten Patentschrift vorbekannte Schienenfahrzeug umfasst ein Kontrollsystem zur Steuerung der Energieversorgung eines Verbrauchers des Schienenfahrzeugs. Das Kontrollsystem weist ein Messmittel zur Bestimmung des Ladezustandes einer Batterie und eine mit dem Messmittel verbundene Steuereinrichtung zum Deaktivieren des Verbrauchers bei Erreichen eines vorbestimmten minimalen Ladezustands auf. Eine Benutzerschnittstelle ist mit einem mit der Steuereinrichtung signalübertragend verbundenen Bedienelement vorgesehen, wobei durch die Betätigung des Bedienelementes der Verbraucher nach einer Deaktivierung reaktivierbar ist.

Die US-Veröffentlichungsschrift US 2016 / 0 129 803 A1 beschreibt ein Verfahren zur Reichweitenprognose bei elektrisch angetriebenen Fahrzeugen.

Die deutsche Veröffentlichungsschrift DE 196 12 062 A1 beschreibt ein Fahrzeug mit einer Anzeigevorrichtung, die Reichweitenbereiche anzeigt.

Die US-Patentschrift US 5 739 674 A offenbart eine tragbare Kontrolleinheit zum Senden und Empfangen von Signalen, die den Ladezustand einer Batterie eines elektrischen Fahrzeugs betreffen.

Bekannt ist ferner die deutsche Veröffentlichungsschrift DE 10 2016 216 405 A.

In Schienenfahrzeugen, beispielsweise Triebzügen für den Personentransport im Nah-, Regional- und Fernverkehr, werden vermehrt so genannte Fahrerassistenzsysteme eingesetzt. Durch Ausgabe geeigneter Hinweise und Empfehlungen assistieren diese Systeme dem Fahrzeugführer dabei, das Schienenfahrzeug derart zu steuern, dass eine vorgegebene Strecke bzw. ein vorgegebener Streckenabschnitt, beispielsweise zwischen zwei Haltestellen, sowohl hinsichtlich eines möglichst niedrigen Energieverbrauchs als auch hinsichtlich der Einhaltung eines vorgegebenen Fahrplans befahren wird.

Bei elektrisch angetriebenen Schienenfahrzeugen, die von einer entlang der Strecke geführten Oberleitung oder einer Stromschiene mit elektrischer Energie gespeist werden, stellt eine Missachtung der Hinweise und Empfehlungen durch den Fahrzeugführer grundsätzlich kein Problem dar, da ein Erreichen der nächsten Haltestelle bzw. des Zielortes durch die quasi unerschöpfliche Energiequelle in jedem Fall sichergestellt wird. Anders sieht es jedoch bei Schienenfahrzeugen aus, die auf Strecken oder Streckenabschnitten ohne Oberleitung bzw. Stromschiene betrieben werden und mittels einer in dem Schienenfahrzeug angeordneten elektrischen Energiequelle mit elektrischer Energie versorgt werden. Eine solche elektrische Energiequelle sind beispielsweise eine oder mehrere Traktionsbatterien. Diese dienen üblicherweise sowohl der Versorgung von Traktionskomponenten des Schienenfahrzeugs für den Antrieb als auch der Versorgung von Nebenverbrauchern des Schienenfahrzeugs.

Aufgrund der begrenzten Speicherkapazität dieser Traktionsbatterien ist es erforderlich, diese während des Betriebs des Schienenfahrzeugs mit elektrischer Energie aufzuladen, beispielsweise während Haltevorgängen mittels im Bereich von Haltestellen angeordneten streckenseitigen Ladevorrichtungen. Eine während eines Ladevorgangs in der Traktionsbatterie bzw. in den mehreren Traktionsbatterien des Schienenfahrzeugs gespeicherte elektrische Energie wird dabei üblicherweise derart bemessen, dass ein nachfolgendes Streckenziel mit der gespeicherten elektrischen Energie und unter Einhaltung des vorgegebenen Fahrplans erreicht wird. Die Bemessung basiert dabei insbesondere auf einem erwarteten Energieverbrauch des Schienenfahrzeugs, welcher beispielsweise basierend auf Simulationswerten, Erfahrungswerten aus vorherigen Fahrten des Schienenfahrzeugs und/oder anderer Schienenfahrzeuge, der aktuellen Einhaltung des Fahrplans, aktuellen und gegebenenfalls erwarteten zukünftigen Parametern des Schienenfahrzeugs, Eigenschaften der Strecke, der Streckenumgebung oder auch Umwelteinflüssen bestimmt wird. Sofern während des Befahrens des Streckenabschnitts von einem den tatsächlichen Energieverbrauch überwachenden Assistenzsystem festgestellt wird, dass bei entsprechendem fortgesetzten Energieverbrauch das Streckenziel nicht erreichbar ist, gibt dieses dem Fahrzeugführer in geeigneter Weise Hinweise hierauf, beispielsweise durch Darstellung von Warnhinweisen oder Handlungsanweisungen auf einem Bildschirm im Führerstand des Schienenfahrzeugs.

Gegenüber der Steuerung eines über eine externe Energiequelle versorgten Schienenfahrzeugs kommt dem Fahrzeugführer eines solchen über eine interne Energiequelle versorgten Schienenfahrzeugs eine größere Verantwortung zu, solche Hinweise und Warnungen eines Assistenzsystems zu beachten und das Schienenfahrzeug entsprechend derart zu steuern, dass es den Streckenabschnitt bzw. den noch zu befahrenden Streckenabschnitt bis zur nächsten Ladevorrichtung mit der verfügbaren elektrischen Energie sicher und unter Einhaltung des vorgegebenen Fahrplans befahren kann.

Aufgabe der vorliegenden Erfindung ist daher, ein Schienenfahrzeug sowie ein Assistenzsystem für den Fahrzeugführer anzugeben, welche es dem Fahrzeugführer ermöglichen, durch energieeffiziente Steuerung des Schienenfahrzeugs ein vorgegebenes Streckenziel zu erreichen.

Diese Aufgabe wird durch das Schienenfahrzeug sowie das Assistenzsystem gemäß den Merkmalen der unabhängigen Patentansprüche gelöst. Weiterbildungen der Erfindung sind in abhängigen Patentansprüchen angegeben.

Ein erfindungsgemäßes Schienenfahrzeug weist zumindest einen elektrischen Energiespeicher zur Versorgung zumindest einer Traktionseinrichtung mit elektrischer Energie und Bedienelemente zur Steuerung der Traktionseinrichtung durch einen Fahrzeugführer auf, wobei das Schienenfahrzeug ferner eine Reichweitenbestimmungseinrichtung und eine optische Ausgabeeinrichtung aufweist, wobei die Reichweitenbestimmungseinrichtung einer Bestimmung eines Status einer Erreichbarkeit eines Streckenziels dient und aus zumindest Informationen bezüglich der in dem Energiespeicher gespeicherten elektrischen Energie, eines aktuellen oder über einen bestimmten Zeitraum ermittelten streckenbezogenen Energieverbrauchs und/oder eines erwarteten streckenbezogenen Energieverbrauchs sowie aus Informationen bezüglich einer aktuellen Position zumindest einen absoluten Energieverbrauch berechnet, der für das Erreichen des Streckenziels für eine vorgegebene Fahrweise zu erwarten ist, wobei die Reichweitenbestimmungseinrichtung einen jeweils erwarteten absoluten Energieverbrauch für zumindest zwei unterschiedliche Fahrweisen des Fahrzeugführers berechnet, wobei eine erste der Fahrweisen eine energieeffiziente Fahrweise und eine zweite der Fahrweisen eine zeiteffiziente Fahrweise ist, wobei mittels der zeiteffizienten Fahrweise das Streckenziel unter Einhaltung eines vorgegebenen Fahrplans erreichbar ist, wobei die Reichweitenbestimmungseinrichtung den für die unterschiedlichen Fahrweisen jeweils berechneten absoluten Energieverbrauch mit der in dem Energiespeicher gespeicherten elektrischen Energie vergleicht und abhängig von dem Ergebnis der Vergleiche die optische Ausgabeeinheit zur Darstellung des aktuellen Status der Erreichbarkeit des Streckenziels gegenüber dem Fahrzeugführer ansteuert, und wobei die zumindest eine optische Ausgabeeinrichtung durch Darstellung einer begrenzten Anzahl grafischer Symbole dem Fahrzeugführer den aktuellen Status der Erreichbarkeit des Streckenziels ausgibt, und durch Darstellung eines weiteren grafischen Symbols dem Fahrzeugführer eine aktuelle Tendenz eines Statusübergangs anzeigt, wobei der Statusübergang einen Wechsel von einem der begrenzten Anzahl grafischer Symbole zu einem anderen grafischen Symbol anzeigt.

Gemäß einer Weiterbildung sind die grafischen Symbole und eine Anordnung der Symbole an bekannte Symbole einer Verkehrsampel angelehnt, welche durch Aufleuchten insbesondere unterschiedlicher Farben den Status darstellen.

Gemäß einer weiteren Weiterbildung zeigt ein weiteres grafisches Symbol dem Fahrzeugführer eine Tendenz eines Statusübergangs an.

Gemäß einer weiteren Weiterbildung weist das Schienenfahrzeug weitere Bedienelemente zur Steuerung von Hilfsbetrieben des Schienenfahrzeugs durch den Fahrzeugführer auf.

Gemäß einer weiteren Weiterbildung ist der zumindest eine elektrische Energiespeicher als eine Traktionsbatterie ausgestaltet.

Gemäß einer weiteren Weiterbildung versorgt der zumindest eine elektrische Energiespeicher elektrische Hilfsbetriebe des Schienenfahrzeugs mit elektrischer Energie.

Ein erfindungsgemäßes Assistenzsystem für ein Schienenfahrzeug weist zumindest eine Reichweitenbestimmungseinrichtung zur Bestimmung eines Status einer Erreichbarkeit eines Streckenziels auf, wobei die Reichweitenbestimmungseinrichtung aus zumindest Informationen bezüglich einer in zumindest einem elektrischen Energiespeicher des Schienenfahrzeugs gespeicherten elektrischen Energie, eines aktuellen oder über einen bestimmten Zeitraum ermittelten streckenbezogenen Energieverbrauchs und/oder eines erwarteten streckenbezogenen Energieverbrauchs sowie aus Informationen bezüglich einer aktuellen Position zumindest einen absoluten Energieverbrauch berechnet, der für das Erreichen des Streckenziels für eine vorgegebene Fahrweise zu erwarten ist, wobei die Reichweitenbestimmungseinrichtung einen jeweils erwarteten absoluten Energieverbrauch für zumindest zwei unterschiedliche Fahrweisen des Fahrzeugführers berechnet, wobei eine erste der Fahrweisen eine energieeffiziente Fahrweise und eine zweite der Fahrweisen eine zeiteffiziente Fahrweise ist, wobei mittels der zeiteffizienten Fahrweise das Streckenziel unter Einhaltung eines vorgegebenen Fahrplans erreichbar ist, und den für die unterschiedlichen Fahrweisen jeweils berechneten absoluten Energieverbrauch mit der in dem Energiespeicher gespeicherten elektrischen Energie vergleicht und abhängig von dem Ergebnis der Vergleiche eine optische Ausgabeeinheit zur Darstellung eines aktuellen Status der Erreichbarkeit des Streckenziels gegenüber dem Fahrzeugführer mittels einer begrenzten Anzahl grafischer Symbole sowie zur Darstellung einer aktuellen Tendenz eines Statusübergangs mittels eines weiteren grafischen Symbols ansteuert, wobei der Statusübergang einen Wechsel von einem der begrenzten Anzahl grafischer Symbole zu einem anderen grafischen Symbol anzeigt.

Die Erfindung wird nachfolgend anhand von Ausführungsbeispielen erläutert. Dabei zeigen

FIG 1     eine beispielhafte generelle Anordnung von grafischen Symbolen auf einer optischen Ausgabeeinheit,

FIG 2     ein mittels der grafischen Symbole dargestellter erster beispielhafter Status,

FIG 3     ein mittels der grafischen Symbole dargestellter zweiter beispielhafter Status,

FIG 4     ein mittels der grafischen Symbole dargestellter dritter beispielhafter Status,

FIG 5     ein Ausführungsbeispiel für ein nicht erfindungsgemäßes Schienenfahrzeug, das mit einem Ausführungsbeispiel für ein nicht erfindungsgemäßes Assistenzsystem ausgestattet ist, und

FIG 6     ein weiteres Ausführungsbeispiel für ein erfindungsgemäßes Schienenfahrzeug, das mit einem Ausführungsbeispiel für ein erfindungsgemäßes Assistenzsystem ausgestattet ist.

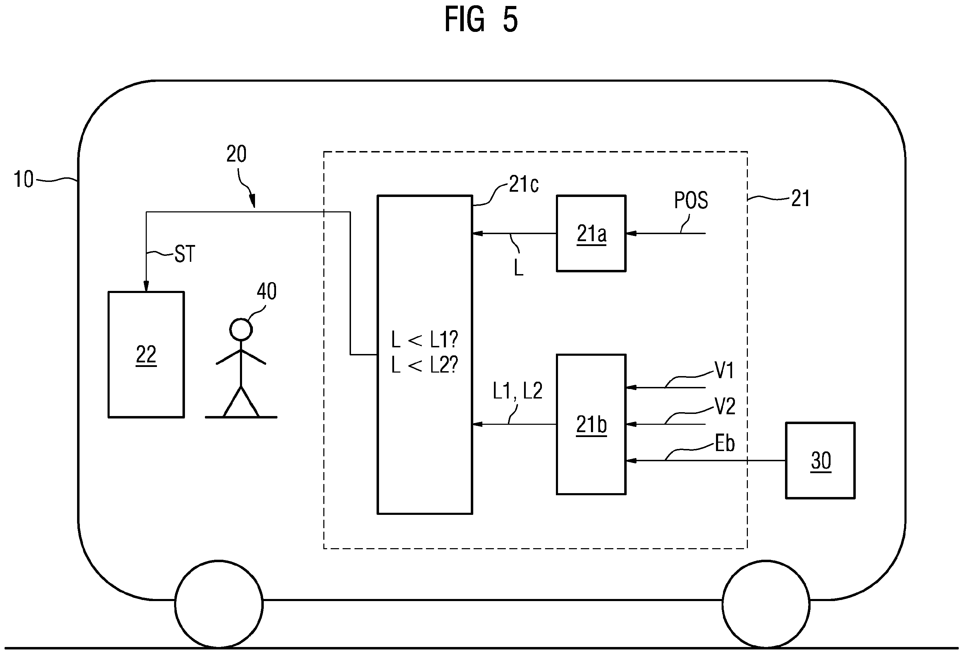

Die FIG 5 zeigt ein Ausführungsbeispiel für ein nicht erfindungsgemäßes Schienenfahrzeug 10 in einer schematischen Seitenansicht. Das Schienenfahrzeug 10 umfasst unter anderem ein nicht erfindungsgemäßes Assistenzsystem 20, das eine Reichweitenbestimmungseinrichtung 21 zur Bestimmung eines Status einer Erreichbarkeit eines Streckenziels sowie eine Ausgabeeinrichtung 22 aufweist, zumindest einen elektrischen Energiespeicher 30 zur Versorgung zumindest einer aus Gründen der Übersicht in der Figur 5 nicht gezeigten Traktionseinrichtung mit elektrischer Energie und ebenfalls aus Gründen der Übersicht in der Figur 5 nicht gezeigte Bedienelemente zur Steuerung der Traktionseinrichtung durch einen Fahrzeugführer 40.

Die Reichweitenbestimmungseinrichtung 21 bestimmt mit einem ersten Submodul 21a aus Informationen bezüglich einer aktuellen Position POS des Schienenfahrzeugs 10 eine Streckenlänge L bis zum nächsten Streckenziel.

Außerdem bestimmt die Reichweitenbestimmungseinrichtung 21 mit einem zweiten Submodul 21b aus Informationen bezüglich einer in zumindest einem elektrischen Energiespeicher 30 des Schienenfahrzeugs 10 gespeicherten elektrischen Energie Eb, eines erwarteten streckenbezogenen Energieverbrauchs V1 bei einer energiesparenden Fahrweise und eines erwarteten streckenbezogenen Energieverbrauchs V2 bei einer straffen Fahrweise jeweils eine aktuelle Reichweite des Schienenfahrzeugs 10. Die aktuelle Reichweite des Schienenfahrzeugs 10 für eine energiesparende Fahrweise ist in der Figur 5 mit dem Bezugszeichen L1 und die aktuelle Reichweite des Schienenfahrzeugs 10 für eine straffe Fahrweise mit dem Bezugszeichen L2 gekennzeichnet. Die Reichweiten L1 und L2 werden vorzugsweise wie folgt berechnet:

$$L1 = Eb/V1$$

und

$$L2 = Eb/V2$$

wobei Eb die in dem Energiespeicher 30 gespeicherte elektrische Energie Eb beispielsweise in der Einheit Kilowattstunde und die streckenbezogenen Energieverbräuche V1 und V2 beispielsweise in der Einheit "Kilowattstunde pro Kilometer" angegeben werden.

Anschließend vergleicht die Reichweitenbestimmungseinrichtung 21 mit einem dritten Submodul 21c die aktuellen Reichweiten L1 und L2 mit der zu befahrenden Streckenlänge L bis zum nächsten Streckenziel.

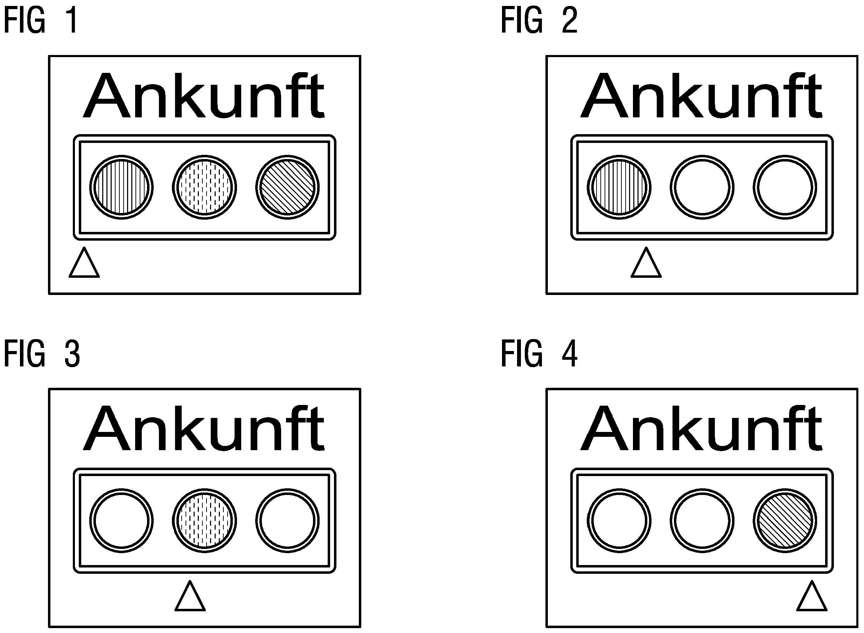

Abhängig von dem Ergebnis dieses Vergleichs wird eine optische Ausgabeeinheit 22 des Assistenzsystems 20 mittels eines Steuersignals ST angesteuert, wobei der aktuelle Status der Erreichbarkeit des Streckenziels gegenüber einem Fahrzeugführer 40 mittels einer begrenzten Anzahl grafischer Symbole angezeigt wird; die Anzeige mit Hilfe der begrenzten Anzahl grafischer Symbole wird im Zusammenhang mit den Figuren 1 bis 4 weiter unten beispielhaft näher erläutert.

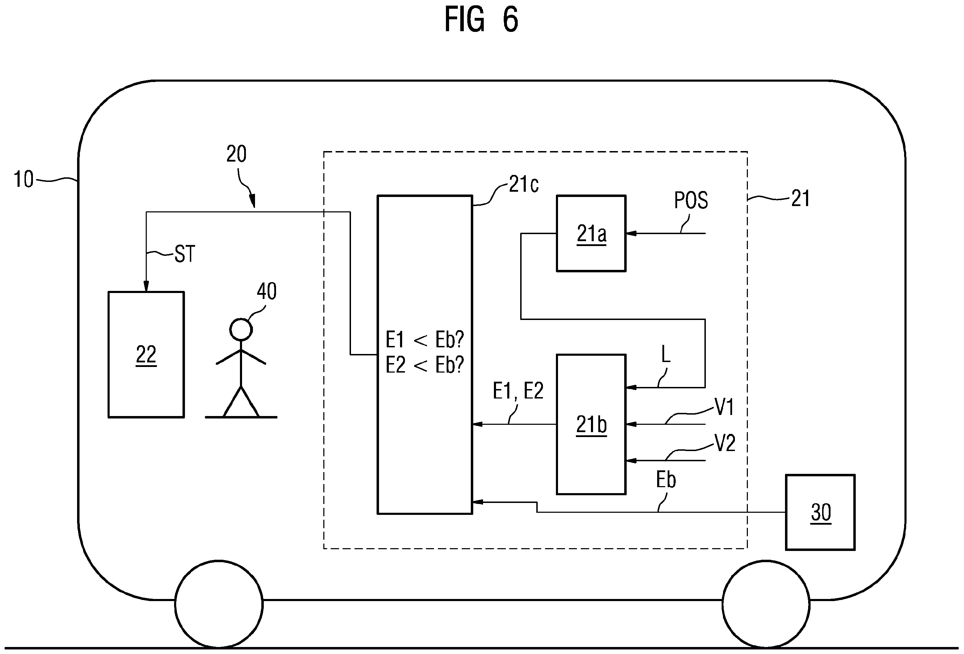

Die FIG 6 zeigt ein Ausführungsbeispiel für ein erfindungsgemäßes Schienenfahrzeug 10, das mit einem erfindungsgemäßen Assistenzsystem 20 ausgestattet ist. Im Unterschied zu dem nicht erfindungsgemäßen Assistenzsystem 20 gemäß FIG 5 arbeitet das Assistenzsystem 20 gemäß FIG 6 auf der Basis eines Energievergleichs, und nicht auf der Basis eines Streckenlängenvergleichs.

Das Assistenzsystem 20 gemäß FIG 6 umfasst zu diesem Zwecke eine Reichweitenbestimmungseinrichtung 21 mit einem ersten Submodul 21a, das aus Informationen bezüglich einer aktuellen Position POS des Schienenfahrzeugs eine Streckenlänge L bis zum nächsten Streckenziel ermittelt.

Dem ersten Submodul 21a ist ein zweites Submodul 21b nachgeordnet, das aus Informationen bezüglich eines erwarteten streckenbezogenen Energieverbrauchs V1 bei einer energiesparenden Fahrweise und eines erwarteten streckenbezogenen Energieverbrauchs V2 bei einer straffen Fahrweise unter Berücksichtigung der Streckenlänge L bis zum nächsten Streckenziel jeweils einen Energiewert im Sinne eines absoluten Energieverbrauchs (bzw. Energiewerts) E1 bzw. E2 ermittelt. Der Energieverbrauch des Schienenfahrzeugs 10 für eine energiesparende Fahrweise ist in der Figur 6 mit dem Bezugszeichen E1 und der Energieverbrauch für eine straffe Fahrweise mit dem Bezugszeichen E2 gekennzeichnet. Die Energieverbräuche E1 und E2 werden vorzugsweise wie folgt berechnet:

$$E1 = V1 \cdot L$$

und

$$E2 = V2 \cdot L$$

wobei die absoluten Energieverbräuche E1 und E2 beispielsweise in der Einheit Kilowattstunde und die streckenbezogenen Energieverbräuche V1 und V2 in der Einheit "Kilowattstunde pro Kilometer" angegeben werden.

Anschließend vergleicht die Reichweitenbestimmungseinrichtung 21 mit einem dritten Submodul 21c die absoluten Energieverbräuche bzw. Energiewerte E1 und E2, die für das Befahren der Streckenlänge L bis zum nächsten Streckenziel nötig sind, mit der in dem Energiespeicher 40 gespeicherten Energie Eb bzw. dem nutzbaren Energieinhalt des Energiespeichers 40.

Abhängig von dem Ergebnis dieses Vergleichs wird die optische Ausgabeeinheit 22 des Assistenzsystems 20 angesteuert, wobei der aktuelle Status der Erreichbarkeit des Streckenziels gegenüber dem Fahrzeugführer 40 mittels einer begrenzten Anzahl grafischer Symbole, die vorzugsweise 4 beträgt, angezeigt wird; die Anzeige mit Hilfe der begrenzten Anzahl grafischer Symbole wird nachfolgend im Zusammenhang mit den Figuren 1 bis 4 beispielhaft näher erläutert.

Vorzugsweise beträgt die begrenzte Anzahl 4. Drei Symbole sind vorzugsweise unter Bildung einer ampelförmigen Symbolreihe angeordnet. Ein weiteres viertes Symbol bildet vorzugsweise einen Tendenzanzeiger, der eine Tendenz eines Statusübergangs anzeigt. Der Tendenzanzeiger bzw. das vierte Symbol ist vorzugsweise über oder unter der Symbolreihe angeordnet. Die optische Ausgabe einer Statusinformation orientiert sich beispielsweise an der bekannten grafischen Struktur von Verkehrsampeln, wie es in FIG 1 dargestellt ist. Einerseits wird hierdurch dem Fahrzeugführer 40 durch Farbsymbole bzw. durch Aufleuchten bestimmter Farben die Information über einen aktuellen Status angegeben, andererseits kann der Fahrzeugführer 40 allein aus dem Aufleuchten eines bestimmten Symbols bereits auf dessen Information schließen, ohne die eigentliche Farbe des aufleuchtenden Symbols wahrzunehmen.

Beispielsweise können für die Bestimmung der Reichweite unterschiedliche Fahrweisen des Fahrzeugführers 40 berücksichtigt werden. Eine dieser Fahrweisen ist - wie oben im Zusammenhang mit den Figuren 5 und 6 beschrieben - beispielsweise eine energiesparende Fahrweise, eine andere beispielsweise eine so genannte "straffe" Fahrweise, wobei letztere Fahrweise weniger energiesparend ist. Für beide Fahrweisen kann - wie oben beispielhaft im Zusammenhang mit der Figur 6 beschrieben - ein jeweiliger Energieverbrauch ermittelt werden. Diese Energieverbräuche, beispielsweise als E1 für die energiesparende Fahrweise bezeichnet und als E2 für die straffe Fahrweise bezeichnet, können als Schwellwerte dienen.

Diese Schwellwerte können - wie oben beispielhaft im Zusammenhang mit der FIG 6 beschrieben - mit einem tatsächlichen bzw. nutzbaren Energieinhalt des Energiespeichers, mit Eb bezeichnet, verglichen werden. Gilt beispielsweise Eb < E1, so kann das Streckenziel nicht erreicht werden und es wird als grafisches Symbol eine rote Ampel angezeigt, wie es beispielhaft in der FIG 2 dargestellt ist. Gilt hingegen beispielsweise E1 <= Eb < E2, so wird eine gelbe Ampel angezeigt, wie es beispielhaft in FIG 3 dargestellt ist. Sofern schließlich E2 <= Eb gilt, wird eine grüne Ampel als grafisches Symbol angezeigt. Anstelle einer Darstellung einer grünen Ampel sollte eine unterschiedliche Farbe verwendet werden, da der Einsatz von grünen Leuchten im Bedienumfeld des Fahrzeugführers 40 aufgrund einer möglichen Verwechslung mit streckenseitigen Lichtsignalen üblicherweise nicht erlaubt ist. Alternativ zu der Farbe Grün kann beispielsweise die ähnliche Farbe Cyan eingesetzt werden.

Die einfache Darstellung in Form von an Verkehrsampeln angelehnten grafischen Symbolen ermöglicht dem Fahrzeugführer 40 ein schnelles Erfassen der aktuellen Situation bezüglich der Reichweite des Schienenfahrzeugs 10 bzw. des Erreichens des nächsten Streckenziels. Aus dieser Darstellung kann der Fahrzeugführer 40 beispielsweise unmittelbar schließen, dass bei einer grünen Ampel die aktuelle Fahrweise in Ordnung ist, bei einer gelben Ampel auf den Energieverbrauch geachtet werden muss, und bei einer roten Ampel konkrete Maßnahmen eingeleitet werden müssen, um das Streckenziel zu erreichen.

Aus dieser vergleichsweise einfachen grafischen Darstellung kann der Fahrzeugführer 40 jedoch nicht ableiten, ob ein Statusübergang, d.h. ein Wechsel von einer Darstellung zu einer anderen Darstellung, entsprechend beispielsweise einem Wechsel von einer gelben Ampel zu einer roten Ampel, bevorsteht, um gegebenenfalls bereits präventiv Maßnahmen zur Verringerung des Energieverbrauchs einzuleiten, beispielsweise die Leistung der Klimaanlagen für die Fahrgasträume zu verringern, um deren Energieverbrauch zu verringern.

Auch kann in vorteilhafter Weise die Darstellung ein weiteres grafisches Symbol, beispielsweise in Form eines Tendenzanzeigers aufweisen, wodurch die Darstellung zweistufig wird. In der beispielhaften Art eines Schiebereglers unterhalb der Ampelsymbole, dargestellt beispielsweise durch ein sich bewegendes Dreieck, wird eine ergänzende Information darüber dargestellt, ob aktuell eine bestimmte Tendenz zu einem Symbol- bzw. Farbwechsel besteht. Die Position des Dreiecks ist beispielsweise bestimmt durch den Wert von Eb relativ zu den Schwellwerten E1 und E2, wie es nachfolgend zu den Figuren 1 bis 4 beschrieben wird. Mittels der zweistufigen Anzeige erhält der Fahrzeugführer 40 eine weitere schnell erfassbare Information über den aktuellen Status, welche zusammen mit den weiteren Informationen eine Steuerung des Schienenfahrzeugs 10 ermöglicht.

FIG 1 zeigt eine beispielhafte Darstellung einer vorteilhaften Reichweitenanzeige. Diese besteht aus einer Anzeige entsprechend einer Verkehrsampel mit drei Farben. Das linke Symbol bzw. die Farbe Rot bedeutet dabei, dass das Streckenziel nicht erreichbar ist. Das mittlere Symbol bzw. die Farbe Gelb bedeutet hingegen, dass das Streckenziel bei einer energiesparenden Fahrweise erreichbar ist, während das rechte Symbol bzw. die Farbe Grün (bzw. eine entsprechende andere Farbe) bedeutet, dass das Streckenziel auch ohne eine energiesparende bzw. bei einer normalen ("straffen") Fahrweise erreichbar ist. Das kleine Dreieck unterhalb der Ampelanzeige zeigt dem Fahrzeugführer 40 darüber hinaus die Tendenz an, d.h. insbesondere, ob der tatsächliche aktuelle Status eher zwischen zwei Symbolen oder genau in dem Bereich eines Symbols liegt.

FIG 2 zeigt beispielhaft eine rote Ampel. Die Reichweite ist nicht ausreichend, um das Streckenziel bei Einhaltung des Fahrplans zu erreichen. Das dreieckige Symbol zeigt ergänzend an, dass der tatsächliche aktuelle Status in der Nähe des Schwellwertes zur gelben Ampel liegt. Dies signalisiert dem Fahrzeugführer 40, dass durch eine geeignete Energiesparmaßnahme, beispielsweise durch Ausschalten von Klimaanlagen oder eine Reduzierung ihrer Kühl- bzw. Heizleistung, der Status in den Bereich der gelben Ampel gelangen kann.

FIG 3 zeigt beispielhaft eine gelbe Ampel. Die Reichweite ist ausreichend, um das Streckenziel bei energiesparender Fahrweise zu erreichen. Das dreieckige Symbol signalisiert in diesem Beispiel, dass der aktuelle Status voll im gelben Bereich ist.

FIG 4 zeigt beispielhaft eine grüne Ampel. Die Reichweite ist ausreichend, um das Streckenziel auch bei einer weniger energiesparenden Fahrweise und unter Einhaltung des Fahrplans zu erreichen. In diesem Beispiel zeigt das dreieckige Symbol an, dass der aktuelle Status weit im grünen Bereich ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Erfindung ist durch die beiliegenden Ansprüche definiert.

**Patentansprüche**

1. Schienenfahrzeug (10), aufweisend zumindest einen elektrischen Energiespeicher (30) zur Versorgung zumindest einer Traktionseinrichtung mit elektrischer Energie und Bedienelemente zur Steuerung der Traktionseinrichtung durch einen Fahrzeugführer (40),

    - wobei das Schienenfahrzeug ferner eine Reichweitenbestimmungseinrichtung (21) und eine optische Ausgabeeinrichtung (22) aufweist,
    - wobei die Reichweitenbestimmungseinrichtung (21) einer Bestimmung eines Status einer Erreichbarkeit eines Streckenziels dient und aus zumindest Informationen bezüglich der in dem Energiespeicher (30) gespeicherten elektrischen Energie (Eb), eines aktuellen oder über einen bestimmten Zeitraum ermittelten streckenbezogenen Energieverbrauchs (V1, V2) und/oder eines erwarteten streckenbezogenen Energieverbrauchs (V1, V2) sowie aus Informationen bezüglich einer aktuellen Position (POS) zumindest einen absoluten Energieverbrauch (E1, E2) berechnet, der für das Erreichen des Streckenziels für eine vorgegebene Fahrweise zu erwarten ist,
    - wobei die Reichweitenbestimmungseinrichtung (21) einen jeweils erwarteten absoluten Energieverbrauch (E1, E2) für zumindest zwei unterschiedliche Fahrweisen des Fahrzeugführers berechnet, wobei eine erste der Fahrweisen eine energieeffiziente Fahrweise und eine zweite der Fahrweisen eine zeiteffiziente Fahrweise ist, wobei mittels der zeiteffizienten Fahrweise das Streckenziel unter Einhaltung eines vorgegebenen Fahrplans erreichbar ist,

    - wobei die Reichweitenbestimmungseinrichtung (21) den für die unterschiedlichen Fahrweisen jeweils berechneten absoluten Energieverbrauch (E1, E2) mit der in dem Energiespeicher (30) gespeicherten elektrischen Energie (Eb) vergleicht und abhängig von dem Ergebnis der Vergleiche die optische Ausgabeeinheit (22) zur Darstellung des aktuellen Status der Erreichbarkeit des Streckenziels gegenüber dem Fahrzeugführer (40) ansteuert, und
    - wobei die zumindest eine optische Ausgabeeinrichtung (22) durch Darstellung einer begrenzten Anzahl grafischer Symbole dem Fahrzeugführer (40) den aktuellen Status der Erreichbarkeit des Streckenziels ausgibt, und durch Darstellung eines weiteren grafischen Symbols dem Fahrzeugführer (40) eine aktuelle Tendenz eines Statusübergangs anzeigt, wobei der Statusübergang einen Wechsel von einem der begrenzten Anzahl grafischer Symbole zu einem anderen grafischen Symbol anzeigt.

2. Schienenfahrzeug (10) nach Anspruch 1, wobei die grafischen Symbole und eine Anordnung der Symbole an bekannte Symbole einer Verkehrsampel angelehnt sind, welche durch Aufleuchten insbesondere unterschiedlicher Farben den Status darstellen.

3. Schienenfahrzeug (10) nach einem der vorstehenden Ansprüche, wobei die optische Ausgabeeinrichtung (22) eine Symbolreihe mit genau drei in Reihe angeordneten Symbolen mit unterschiedlichen Farben umfasst.

4. Schienenfahrzeug (10) nach Anspruch 2 oder 3, wobei die drei Symbole der Symbolreihe kreisförmige Leuchten mit unterschiedlichen Leuchtfarben sind.

5. Schienenfahrzeug (10) nach Anspruch 1, wobei das weitere grafische Symbol unter oder über der aus den drei in Reihe angeordneten Symbolen gebildeten Symbolreihe angeordnet ist, wobei die Position des weiteren grafischen Symbols relativ zu den drei Symbolen der Symbolreihe die Tendenz eines Statusübergangs anzeigt.

6. Schienenfahrzeug (10) nach Anspruch 1 oder 5, wobei

    - das weitere grafische Symbol in Form eines Schiebereglers ausgebildet ist und/oder

- das weitere grafische Symbol ein Dreieck, vorzugsweise ein gleichschenkliges Dreieck ist, das mit einer Spitze der Symbolreihe zugewandt ist.

7. Schienenfahrzeug (10) nach einem der vorstehenden Ansprüche, wobei

    - das Schienenfahrzeug 10 mit weiteren Bedienelementen einer Steuerung von Hilfsbetrieben des Schienenfahrzeugs (10) durch den Fahrzeugführer (40) ausgestattet ist und/oder
    - der zumindest eine elektrische Energiespeicher (30) als eine Traktionsbatterie ausgestaltet ist und/oder
    - der zumindest eine elektrische Energiespeicher (30) elektrische Hilfsbetriebe des Schienenfahrzeugs (10) mit elektrischer Energie versorgt.

8. Assistenzsystem (20) für ein Schienenfahrzeug (10), aufweisend zumindest:
   eine Reichweitenbestimmungseinrichtung (21) zur Bestimmung eines Status einer Erreichbarkeit eines Streckenziels, wobei die Reichweitenbestimmungseinrichtung (21) aus zumindest Informationen bezüglich einer in zumindest einem elektrischen Energiespeicher (30) des Schienenfahrzeugs (10) gespeicherten elektrischen Energie (Eb), eines aktuellen oder über einen bestimmten Zeitraum ermittelten streckenbezogenen Energieverbrauchs (V1, V2) und/oder eines erwarteten streckenbezogenen Energieverbrauchs (V1, V2) sowie aus Informationen bezüglich einer aktuellen Position (POS) zumindest einen absoluten Energieverbrauch (E1, E2) berechnet, der für das Erreichen des Streckenziels für eine vorgegebene Fahrweise zu erwarten ist, wobei die Reichweitenbestimmungseinrichtung (21) einen jeweils erwarteten absoluten Energieverbrauch (E1, E2) für zumindest zwei unterschiedliche Fahrweisen des Fahrzeugführers berechnet, wobei eine erste der Fahrweisen eine energieeffiziente Fahrweise und eine zweite der Fahrweisen eine zeiteffiziente Fahrweise ist, wobei mittels der zeiteffizienten Fahrweise das Streckenziel unter Einhaltung eines vorgegebenen Fahrplans erreichbar ist, und den für die unterschiedlichen Fahrweisen jeweils berechneten absoluten Energieverbrauch (E1, E2) mit der in dem Energiespeicher (30) gespeicherten elektrischen Energie (Eb) vergleicht und abhängig von dem Ergebnis der Vergleiche eine optische Ausgabeeinheit (22) zur Darstellung eines aktuellen Status der Erreichbarkeit des Streckenziels gegenüber dem Fahrzeugführer (40) mittels einer begrenzten Anzahl grafischer Symbole sowie zur Darstellung einer aktuellen Tendenz eines Statusübergangs mittels eines weiteren grafischen Symbols ansteuert, wobei der Statusübergang einen Wechsel von einem der begrenzten Anzahl grafischer Symbole zu einem anderen grafischen Symbol anzeigt.

**Claims**

1. Rail vehicle (10), having at least one electrical energy storage unit (30) for supplying at least one traction device with electrical energy and operating elements for control of the traction device by a vehicle driver (40),

    _ wherein the rail vehicle further has a range determination device (21) and an optical output device (22),
    _ wherein the range determination device (21) is used to determine a status of an attainability of a route destination and calculates at least one absolute energy consumption (E1, E2) at least from information regarding the electrical energy (Eb) stored in the electrical energy storage unit (30), a current energy consumption (V1, V2) or an energy consumption (V1, V2) determined over a certain period of time and/or an expected route-related energy consumption (V1, V2), as well as from information regarding a current position (POS), which absolute energy consumption (E1, E2) is to be expected for the attainment of the route destination for a specified driving style,
    _ wherein the range determination device (21) calculates a respectively expected absolute energy consumption (E1, E2) for at least two different driving styles of the vehicle driver, wherein a first of the driving styles is an energy-efficient driving style and a second of the driving styles is a time-efficient driving style, wherein by means of the time-efficient driving style the route destination can be attained in compliance with a specified timetable,
    _ wherein the range determination device (21) compares the absolute energy consumption (E1, E2) respectively calculated for the different driving styles with the electrical energy (Eb) stored in the energy storage unit (30) and as a function of the result of the comparisons actuates the optical output unit (22) to display to the vehicle driver (40) the current status of the attainability of the route destination, and
    _ wherein the at least one optical output device (22), by displaying a limited number of graphic symbols, outputs to the vehicle driver (40) the current status of the attainability of the route destination, and by displaying a further graphic symbol displays to the vehicle driver (40) a current tendency of a status transition, wherein the status transition indicates a change from one of the limited number of graphic symbols to another graphic symbol.

2. Rail vehicle (10) according to claim 1, wherein the graphic symbols and an arrangement of the symbols are based on known symbols of a traffic light, which represent the status by illumination in particular of different colours.

3. Rail vehicle (10) according to one of the preceding claims, wherein the optical output device (22) comprises a row of symbols with exactly three symbols arranged in a row and having different colours.

4. Rail vehicle (10) according to claim 2 or 3, wherein the three symbols of the row of symbols are circular lamps with different coloured lamps.

5. Rail vehicle (10) according to claim 1, wherein the further graphic symbol is arranged below or above the row of symbols formed by the three symbols arranged in a row, wherein the position of the further graphic symbol relative to the three symbols of the row of symbols indicates the tendency of a status transition.

6. Rail vehicle (10) according to claim 1 or 5, wherein

   - the further graphic symbol is designed in the form of a slide control and/or
   - the further graphic symbol is a triangle, preferably an isosceles triangle, which has one vertex facing the row of symbols.

7. Rail vehicle (10) according to one of the preceding claims, wherein

   - the rail vehicle 10 is equipped with further operating elements for control of auxiliary operations of the rail vehicle (10) by the vehicle driver (40) and/or
   - the at least one electrical energy storage unit (30) is designed as a traction battery and/or
   - the at least one electrical energy storage unit (30) supplies electrical auxiliary operations of the rail vehicle (10) with electrical energy.

8. Assistance system (20) for a rail vehicle (10), having at least:
   a range determination device (21) for determining a status of an attainability of a route destination, wherein the range determination device (21) calculates at least one absolute energy consumption (E1, E2) at least from information regarding an electrical energy (Eb) stored in at least one electrical energy storage unit (30) of the rail vehicle (10), a current energy consumption (V1, V2) or an energy consumption (V1, V2) determined over a certain period of time and/or an expected route-related energy consumption (V1, V2), as well as from information regarding a current position (POS), which absolute energy consumption (E1, E2) is to be expected for the attainment of the route destination for a specified driving style, wherein the range determination device (21) calculates a respectively expected absolute energy consumption (E1, E2) for at least two different driving styles of the vehicle driver, wherein a first of the driving styles is an energy-efficient driving style and a second of the driving styles is a time-efficient driving style, wherein by means of the time-efficient driving style the route destination can be attained in compliance with a specified timetable, and compares the absolute energy consumption (E1, E2) respectively calculated for the different driving styles with the electrical energy (Eb) stored in the energy storage unit (30) and as a function of the result of the comparisons actuates an optical output unit (22) to display to the vehicle driver (40) a current status of the attainability of the route destination, by means of a limited number of graphic symbols, as well as to display a current tendency of a status transition by means of a further graphic symbol, wherein the status transition indicates a change from one of the limited number of graphic symbols to another graphic symbol.

## Revendications

1. Véhicule (10) ferroviaire, comportant au moins un accumulateur (30) d'énergie électrique pour l'alimentation d'au moins un dispositif de traction en énergie électrique et des éléments de service pour la commande du dispositif de traction par un conducteur (40) du véhicule,

   - dans lequel le véhicule ferroviaire a en outre un dispositif (21) de détermination de la portée et une unité (22) optique de sortie,
   - dans lequel le dispositif (21) de détermination de la portée sert à la détermination d'un statut d'une possibilité d'atteindre une cible sur la voie et calcule à partir au moins des informations en ce qui concerne l'énergie (Eb) électrique accumulée dans l'accumulateur (30) d'énergie, d'une consommation (V1, V2) d'énergie rapportée à la voie en cours ou déterminée sur un laps de temps déterminé et/ou d'une consommation (V1, V2) d'énergie escomptée rapportée à la voie, ainsi que d'informations concernant une position (POS) en cours, au moins une consommation (E1, E2) absolue d'énergie, à laquelle on s'attend, pour atteindre la cible sur la voie pour un mode de circulation donné à l'avance,
   - dans lequel le dispositif (21) de détermination de la portée calcule une consommation (E1, E2) d'énergie absolue escomptée respectivement pour au moins deux modes de circulation différents du conducteur du véhicule, un premier des modes de circulation étant un mode de circulation efficace du point de vue de l'énergie et un deuxième des modes de circulation étant un mode de circulation efficace du point de vue du temps, dans lequel au moyen du mode de circulation efficace du point de vue du temps, la cible sur la voie peut être atteinte en respectant un plan de circulation donné à l'avance,
- dans lequel le dispositif (21) de détermination de la portée compare la consommation (E1, E2) d'énergie absolue calculée respectivement pour les modes de circulation différents à l'énergie (Eb) électrique accumulée dans l'accumulateur (30) d'énergie et, en fonction du résultat de la comparaison, commande l'unité (22) optique de sortie pour la représentation du statut en cours de la possibilité d'atteindre la cible sur la voie en face du conducteur (40) du véhicule, et
- dans lequel le au moins une unité (22) optique de sortie donne, en représentant un nombre limité de symboles graphiques, au conducteur (40) du véhicule le statut en cours de la possibilité d'atteindre la cible sur la voie et indique, par la représentation d'un autre symbole graphique au conducteur (40) du véhicule une tendance en cours d'une transition de statut, dans lequel la transition de statut indique un changement de l'un du nombre limité de symboles graphiques à un autre symbole graphique.

2. Véhicule (10) ferroviaire suivant la revendication 1, dans lequel
les symboles graphiques et un agencement des symboles s'appuient sur des symboles connus d'un feu de circulation, qui représentent le statut par des clignotements, notamment de couleurs différentes.

3. Véhicule (10) ferroviaire suivant l'une des revendications précédentes, dans lequel
l'unité (22) optique de sortie comprend une rangée de symboles ayant trois symboles montés en rangée de couleurs différentes.

4. Véhicule (10) ferroviaire suivant la revendication 2 ou 3, dans lequel
les trois symboles de la rangée de symboles sont des luminaires de couleurs fluorescentes différentes.

5. Véhicule (10) ferroviaire suivant la revendication 1, dans lequel
l'autre symbole graphique est disposé en-dessous ou au-dessus de la rangée de symboles formée des trois symboles disposés suivant une rangée, la position de l'autre symbole graphique par rapport aux trois symboles de la rangée de symboles indiquant la tendance à une transition de statut.

6. Véhicule (10) ferroviaire suivant la revendication 1 ou 5, dans lequel

- l'autre symbole graphique est constitué sous la forme d'un régleur à coulisse et/ou
- l'autre symbole graphique est un triangle, de préférence un triangle isocèle qui, par un sommet, est tourné vers la rangée de symboles.

7. Véhicule (10) ferroviaire suivant l'une des revendications précédentes, dans lequel

- le véhicule 10 ferroviaire est équipé d'autres éléments de service d'une commande par le conducteur (40) du véhicule de circuits auxiliaires du véhicule (10) ferroviaire et/ou
- le au moins un accumulateur (30) d'énergie électrique est conformé en batterie de traction et/ou
- le au moins un accumulateur (30) d'énergie électrique alimente des circuits auxiliaires du véhicule (10) ferroviaire en énergie électrique.

8. Système (20) d'assistance pour un véhicule (10) ferroviaire comportant au moins :
un dispositif (21) de détermination de la portée pour la détermination d'un statut d'une possibilité d'atteindre une cible sur la voie, dans lequel le dispositif (21) de détermination de la portée calcule, à partir au moins d'informations en ce qui concerne une énergie (Eb) électrique accumulée dans l'accumulateur (30) d'énergie du véhicule (10) ferroviaire, une consommation (V1, V2) d'énergie rapportée à la voie en cours ou déterminée sur un laps de temps déterminé et/ou d'une consommation (V1, V2) d'énergie escomptée rapportée à la voie, ainsi que d'informations concernant une position (POS) en cours, au moins une consommation (E1, E2) absolue d'énergie escomptée pour atteindre la cible sur la voie pour un mode de circulation donné à l'avance, dans lequel le dispositif (21) de détermination de la portée compare une consommation (E1, E2) d'énergie absolue escomptée respectivement pour au moins deux modes de circulation différents du conducteur du véhicule, un premier mode de fonctionnement étant un mode de fonctionnement efficace du point de vue de l'énergie et un deuxième mode de fonctionnement efficace du point de vue du temps, dans lequel, au moyen du mode de fonctionnement efficace du point de vue du temps, on peut atteindre la cible sur la voie, tout en respectant un plan de circulation donné à l'avance, et la consommation (E1, E2) d'énergie absolue calculée respectivement pour les modes de fonctionnement différentes à l'énergie (Eb) électrique accumulée dans l'accumulateur (30) d'énergie et, en fonction du résultat de la comparaison, commande l'unité (22) optique de sortie pour la représentation du statut en cours de la possibilité d'atteindre la cible sur la voie en face du conducteur (40) du véhicule, au moyen d'un nombre limité de symboles graphiques ainsi que pour la représentation d'une tendance en cours d'une transition de statut au moyen d'un autre symbole graphique, la transition de statut indiquant un changement de l'un du nombre limité de symboles graphiques à un autre symbole graphique.

FIG 1

FIG 2

FIG 3

FIG 4

Ankunft

# FIG 5

# FIG 6

EP 3 782 851 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017129255 B3
- US 20160129803 A1
- DE 19612062 A1
- US 5739674 A
- DE 102016216405 A